# FASCICULE DE BREVET EUROPEEN

(11) **EP 2 816 253 B1**
(45) Date de publication et mention de la délivrance du brevet: **24.05.2023**
(21) Numéro de dépôt: 14172089.6
(22) Date de dépôt: 12.06.2014
(51) Int. Cl.: F16H 1/28, F16H 49/00, F16H 13/12, F16H 1/46, E06B 9/68, E06B 9/72

(54) **RÉDUCTEUR ÉPICYCLOÏDAL POUR ACTIONNEUR D ENROULEMENT ET DE DÉROULEMENT**
PLANETENGETRIEBE FÜR AUFROLL- UND ABROLLSTELLGLIED
EPICYCLIC GEAR FOR WINDING AND UNWINDING ACTUATOR

(30) Priorité: 17.06.2013 FR 1355633
(43) Date de publication de la demande: 24.12.2014
(73) Titulaire: SOMFY ACTIVITES SA, 74300 Cluses (FR)
(72) Inventeur: CAVAREC, Pierre Emmanuel, 74130 Mont Saxonnex (FR); SOURAIN, Rémi, 74700 Domancy (FR); GERINIERE, Pierre, 74300 Cluses (FR)
(74) Mandataire: Germain Maureau

(56) Documents cités:
- EP-A1- 0 546 995
- CN-A- 102 723 806
- JP-A- 2006 038 110
- JP-A- 2012 163 186

## Description

La présente invention concerne un actionneur pour l'enroulement et le déroulement de toiles, écrans, stores ou volets roulants comprenant un réducteur épicycloïdal.

Il est connu d'utiliser un réducteur épicycloïdal pour la transmission d'une puissance mécanique, notamment entre un moteur tubulaire et un organe d'enroulement et de déroulement desdites toiles, écrans, stores ou volets roulants. Selon l'état de la technique, l'actionneur est sensiblement longitudinal et comprend le moteur tubulaire, le réducteur épicycloïdal et l'organe d'enroulement et de déroulement.

Le réducteur épicycloïdal comprend un arbre d'entrée accouplé au moteur tubulaire et un arbre de sortie accouplé à l'organe d'enroulement et de déroulement. La vitesse de rotation de l'arbre d'entrée est supérieure à la vitesse de rotation de l'arbre de sortie.

Le réducteur épicycloïdal comprend au moins un train épicycloïdal agencé pour transmettre la puissance de l'arbre d'entrée à l'arbre de sortie en réduisant la vitesse de rotation. Il est connu d'utiliser un train épicycloïdal comprenant deux arbres coaxiaux dits planétaires intérieur et extérieur, des satellites engrenant avec les deux planétaires, et tournant autour de leur axe commun, un porte-satellites et une liaison à un bâti.

Le brevet EP0546995, par exemple, décrit un actionneur sensiblement longitudinal pour l'enroulement et le déroulement de toiles ou d'écrans avec un réducteur épicycloïdal comprenant plusieurs trains épicycloïdaux dans lequel est ménagée une pièce intermédiaire ayant pour rôle d'unir deux parties complémentaires de la couronne du réducteur et permettant en outre d'obtenir un réducteur tubulaire.

Le réducteur épicycloïdal donne satisfaction en ce que la puissance peut être transmise, au rendement mécanique près, de l'arbre d'entrée à l'arbre de sortie du réducteur en réduisant la vitesse de rotation au niveau de chaque train épicycloïdal que le réducteur comporte.

Toutefois une différence de vitesse de rotation importante entre l'entrée et la sortie d'un train épicycloïdal implique un nombre réduit de dents sur au moins un engrenage. Or ce nombre de dents est limité notamment par le diamètre ou la résistance mécanique nécessaire aux engrènements. Cette disposition a des conséquences néfastes sur la robustesse du réducteur épicycloïdal, mais également sur le niveau acoustique pour des raisons mécaniques.

Il est aussi connu de la demande de brevet JP2012163186 d'utiliser un réducteur épicycloïdal comprenant un satellite pourvu d'une portion d'entrainement mécanique et d'une portion d'entrainement magnétique. La portion magnétique coopère avec l'arbre d'entrée et la portion mécanique coopère avec un porte satellite solidaire de l'arbre de sortie. Les capacités de démultiplication de ce réducteur semblent toutefois limitées.

La présente invention vise à résoudre tout ou partie des inconvénients mentionnés ci-dessus.

A cet effet, la présente invention concerne un actionneur sensiblement longitudinal pour l'enroulement et le déroulement de toiles, écrans, stores ou volets roulants tels que décrits dans les revendications 1 ou 2. L'actionneur comprend un réducteur épicycloïdal comprenant au moins deux trains épicycloïdaux, chaque train épicycloïdal comprenant un arbre d'entrée, un arbre de sortie, l'arbre de sortie du premier train épicycloïdal étant accouplé à l'arbre d'entrée du second train épicycloïdal.

Le premier train épicycloïdal comprend un premier satellite agencé pour transmettre un couple moteur entre l'arbre d'entrée et l'arbre de sortie du premier train épicycloïdal.

Le premier satellite comprend une portion d'entrainement magnétique agencée pour coopérer avec une partie magnétique complémentaire du premier train épicycloïdal par un effet d'interaction magnétique entre au moins un pôle magnétique de la portion d'entraînement magnétique et au moins un pôle magnétique de la portion d'entraînement magnétique complémentaire.

Le premier satellite comprend une portion d'entrainement mécanique agencée pour coopérer mécaniquement avec une partie d'entraînement mécanique complémentaire du premier train épicycloïdal.

La portion d'entraînement magnétique et la portion d'entraînement mécanique sont solidaires en rotation autour d'un axe de révolution du premier satellite, et le second train épicycloïdal comprend un second satellite agencé pour réaliser un entraînement mécanique entre l'arbre d'entrée et l'arbre de sortie du second train épicycloïdal.

Selon un aspect de l'invention, la partie magnétique complémentaire comprend un nombre de paires de pôles magnétiques inférieur ou égal à deux, ou strictement inférieur à trois.

La différence maximale entre le nombre de pôles de la portion d'entrainement magnétique et le nombre de pôles de la partie magnétique complémentaire est supérieure à ce que pourrait être la différence maximale entre le nombre de dents de deux engrenages coopérant.

En effet le nombre de dents ne peut pas être réduit au dessous d'une certaine limite imposée par des contraintes mécaniques.

Ainsi il apparait que le premier train épicycloïdal comportant une portion d'entrainement purement magnétique est susceptible de présenter un rapport entre les vitesses de rotation de son arbre d'entrée et de son arbre de sortie supérieur au même rapport d'un train épicycloïdal entièrement mécanique, le nombre de pôles de l'arbre d'entrée étant de deux.

Selon un aspect de l'invention, la portion d'entraînement mécanique et la portion d'entraînement magnétique sont décalées axialement selon l'axe de révolution du premier satellite.

Selon un aspect de l'invention, la portion d'entraînement mécanique et la portion d'entraînement magnétique sont décalées entre elles radialement par rapport à l'axe de révolution du premier satellite.

Selon un aspect de l'invention, la portion d'entraînement mécanique et la portion d'entraînement magnétique sont circulaires et présentent des diamètres extérieurs différents.

Selon un aspect de l'invention, l'arbre de sortie et le premier satellite présentent une liaison pivot présentant un axe coïncidant avec l'axe de révolution du premier satellite, en particulier l'arbre de sortie étant solidaire d'un porte-satellite du premier satellite.

Selon l'invention, la portion d'entrainement magnétique est en outre pourvue d'une denture agencée pour engrener une denture complémentaire disposée sur la partie magnétique complémentaire.

L'agencement de la denture avec la denture complémentaire est destiné à empêcher une perte de synchronisation entre les pôles magnétiques de la portion d'entrainement magnétique et les pôles magnétiques de la portion magnétique complémentaire.

Selon un aspect de l'invention, chaque dent de la portion d'entrainement magnétique comprend deux pôles magnétiques de polarité inverse, chaque pôle magnétique positif étant disposé d'un premier côté de chaque dent et chaque pôle magnétique négatif étant disposé d'un second côté de chaque dent.

Selon un aspect de l'invention, la portion d'entrainement magnétique et la partie magnétique complémentaire sont agencées pour transmettre un couple moteur par l'interaction magnétique des pôles magnétiques avec les pôles magnétiques correspondants selon un premier régime de fonctionnement, ou par une interaction magnétique et un engrènement simultané de la denture avec la denture complémentaire selon un deuxième régime de fonctionnement.

La portion d'entrainement magnétique est agencée pour transmettre un couple nominal à la partie magnétique complémentaire. Le premier régime de fonctionnement correspond à un couple compris entre le couple nul et le couple nominal inclus. Le second régime de fonctionnement correspond à un couple strictement supérieur au couple nominal : Il s'agit d'un fonctionnement en surrégime.

Lors d'un fonctionnement selon le premier régime, la portion d'entrainement magnétique coopère avec la partie magnétique complémentaire sans contact : il s'agit du régime de fonctionnement normal.

Lors d'un fonctionnement selon le second régime, la portion d'entrainement magnétique coopère à la fois magnétiquement et mécaniquement avec la partie magnétique complémentaire.

Toutefois, contrairement à un engrenage mécanique, la transmission du couple est magnéto-mécanique. Cette disposition limite les frottements dans la zone de contact entre la denture et la denture complémentaire.

Selon un aspect de l'invention, la denture et la denture complémentaire comprennent un revêtement plastique chargé en fibre de verre.

Selon un aspect de l'invention, la partie magnétique complémentaire est rapportée sur l'arbre d'entrée du premier train épicycloïdal.

Selon un aspect de l'invention, la partie magnétique complémentaire comprend un premier et un deuxième pôle, le premier et le deuxième pôle étant de polarité inverse.

Selon un aspect de l'invention, la partie magnétique complémentaire est disposée sur un bâti du premier train épicycloïdal.

Selon un aspect de l'invention, la partie magnétique complémentaire est une couronne rapportée sur le bâti coopérant avec la portion d'entrainement magnétique du premier satellite.

Selon un aspect de l'invention, la partie magnétique complémentaire est un engrenage planétaire intérieur du bâti du premier train épicycloïdal.

Selon un autre aspect de l'invention, la portion d'entrainement magnétique comprend une pluralité de pôles magnétiques décalés dans le sens de l'axe central.

Selon l'invention l'actionneur comprend un moteur tubulaire agencé pour transmettre un couple moteur à l'arbre d'entrée du premier train épicycloïdal.

Selon un aspect de l'invention l'actionneur comprend un organe d'enroulement et de déroulement desdites toiles, écrans, stores ou volets roulants agencé pour procéder à l'enroulement ou au déroulement par un entrainement mécanique de l'arbre de sortie du second train épicycloïdal.

Selon l'invention, l'actionneur comprend en outre un frein positionné après le premier train épicycloïdal, le premier train épicycloïdal du réducteur épicycloïdal comprenant une portion d'entraînement purement magnétique.

Selon l'invention, le frein est à ressort ou un frein à came, ou encore un frein électromagnétique. De toute façon l'invention sera bien comprise à l'aide de la description qui suit en référence aux dessins schématiques annexés représentant, à titre d'exemple non limitatif, une forme d'exécution de ce réducteur épicycloïdal.
Figure 1 est un schéma d'un actionneur sensiblement longitudinal comprenant un réducteur épicycloïdal selon un premier mode de réalisation.
Figure 2 est un schéma d'un actionneur sensiblement longitudinal comprenant un réducteur épicycloïdal selon un deuxième mode de réalisation.
Figure 3 est une coupe longitudinale d'un premier satellite d'un premier train épicycloïdal du réducteur épicycloïdal, selon les premier et deuxième modes de réalisation.
Figure 4 est une coupe transversale de trois premiers satellites coopérant avec une partie magnétique complémentaire d'un arbre d'entrée du premier train épicycloïdal, selon un premier agencement des premier et deuxième modes de réalisation.
Figure 5 est une coupe transversale d'une portion magnétique d'un premier satellite coopérant avec une partie magnétique complémentaire d'un arbre d'entrée du premier train épicycloïdal, selon un deuxième agencement des premier et deuxième modes de réalisation.
Figure 6 est une coupe transversale d'une portion d'entrainement mécanique du premier satellite coopérant avec une partie mécanique d'entrainement complémentaire, selon les premier et deuxième modes de réalisation.
Figure 7 est une coupe transversale de la portion magnétique coopérant avec la portion magnétique complémentaire, selon les premier et deuxième modes de réalisation.

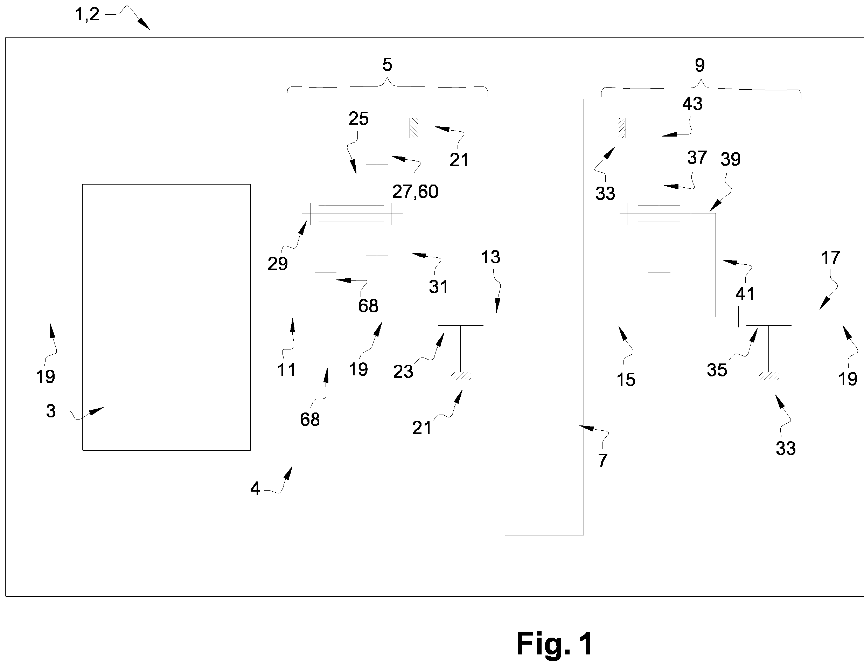

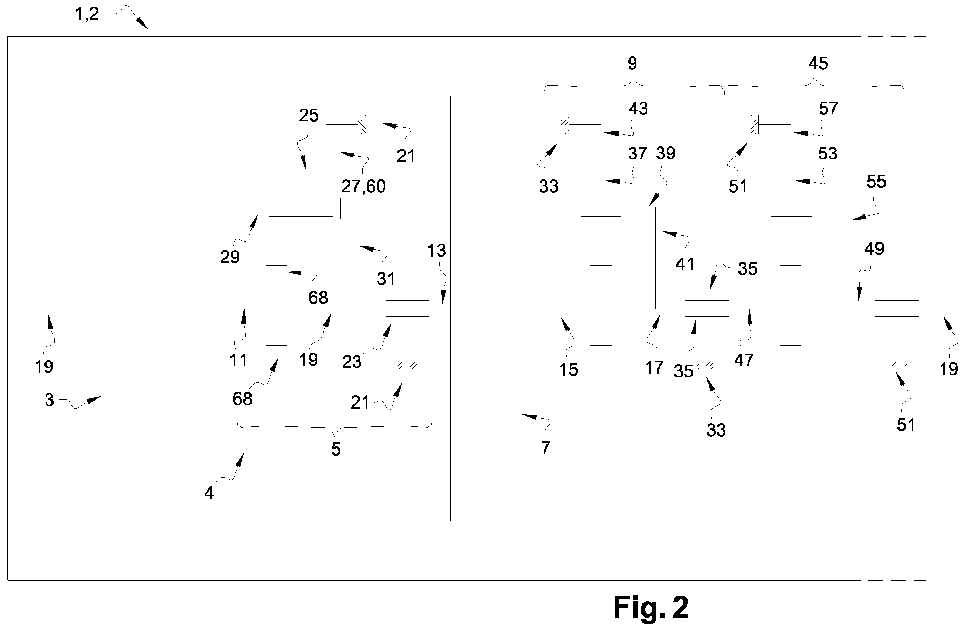

Comme illustré aux figures 1 et 2, un actionneur 1 pour l'enroulement et le déroulement d'un élément mobile comme des toiles, écrans, stores ou volets roulants s'étend sensiblement longitudinalement. Il comprend un carter tubulaire 2 dans lequel sont positionnés les éléments qui constituent l'actionneur 1.

Selon un premier mode de réalisation illustré à la figure 1, l'actionneur 1 comprend un moteur 3 et un réducteur épicycloïdal 4 pourvu d'un premier train épicycloïdal 5, d'un frein 7 et d'un second train épicycloïdal 9. Le moteur 3 est un moteur AC asynchrone ou DC avec ou sans balai autrement appelé moteur à commutation électronique.

Le premier train épicycloïdal 5 comprend un arbre d'entrée 11 et un arbre de sortie 13 et le deuxième train épicycloïdal 9 comprend un arbre d'entrée 15 et un arbre de sortie 17. Selon la terminologie relative aux trains épicycloïdaux, les arbres d'entrée 11, 15 sont des planétaires intérieurs et les arbres de sortie 13, 17 sont des porte-satellites.

Le moteur 3 est accouplé à l'arbre d'entrée 11 du premier train épicycloïdal 5. Le frein 7 s'intercale entre l'arbre de sortie 13 du premier train épicycloïdal 5 et l'arbre d'entrée 15 du second train épicycloïdal 9. Il est préférentiellement de type frein à ressort, mais il pourrait également se présenter sous la forme d'un frein à came. Il pourrait également s'agir d'un frein électromagnétique.

L'arbre d'entrée 11 et l'arbre de sortie 13 du premier train épicycloïdal 5 s'étendent selon un axe central 19 qui constitue leur axe de révolution. Le premier train épicycloïdal 5 comprend un premier palier de guidage 23 de l'arbre de sortie 13.

Le premier train épicycloïdal 5 comprend en outre un premier satellite 25 et une première couronne 27 liée à un premier bâti 21, par exemple le carter tubulaire de l'actionneur. Le premier satellite 25 est apte à se déplacer en rotation sur lui-même suivant un l'axe de révolution 29 et autour de l'axe central 19. Le premier train épicycloïdal 5 comprend un premier porte-satellite 31, l'arbre de sortie 13 étant solidaire de ce premier porte-satellite 31. Le premier satellite 25 engrenant sur la couronne 27 fixe, la rotation du premier satellite 25 entraîne ainsi le premier porte-satellite 31, et donc l'arbre de sortie 13, en rotation autour de l'axe central 19. Le nombre de satellites dans un train épicycloïdal est classiquement de trois ou quatre.

De manière similaire, l'arbre d'entrée 15 et l'arbre de sortie 17 du second train épicycloïdal 9 s'étendent selon l'axe central 19. L'axe central 19 est également l'axe de révolution de l'arbre d'entrée 15 et de l'arbre de sortie 17 du second train épicycloïdal 9. Le second train épicycloïdal 9 comprend un second bâti 33 et un second palier de guidage 35 de l'arbre de sortie 17.

Le second train épicycloïdal 9 comprend un second satellite 37 agencé pour réaliser un entraînement mécanique entre l'arbre d'entrée 15 et l'arbre de sortie 17 du second train épicycloïdal 9. Le second satellite 37 est apte à se déplacer en rotation sur lui-même suivant un axe de révolution 39 et autour de l'axe central 19.

Le second train épicycloïdal 9 comprend un second porte-satellite 41, l'arbre de sortie 17 étant solidaire du second porte-satellite 41. Le second porte-satellite 41 et le second satellite 37 présentent une liaison pivot selon un axe coïncidant avec l'axe de révolution 39 du second satellite 37.

Le second bâti 33, par exemple le carter tubulaire de l'actionneur 1, est également pourvu d'une seconde couronne 43. Le second satellite 37 comprend une denture et coopère mécaniquement avec une denture externe de l'arbre d'entrée 15 et une denture interne de la seconde couronne 43 fixe. Le second satellite 37 est ainsi agencé pour réaliser un mouvement de rotation autour de l'axe central 19 lorsqu'il est entrainé par l'arbre d'entrée 15 du second train épicycloïdal 9, entraînant ainsi le second porte-satellite 41, et donc l'arbre de sortie 17, en rotation autour de l'axe central 19.

Selon le premier mode de réalisation, l'arbre de sortie 17 du second train épicycloïdal 9 est couplé à un organe d'enroulement et de déroulement de toiles, écrans, stores ou volets roulants non représenté.

Selon un second mode de réalisation illustré à la figure 2, l'actionneur 1 comprend en outre un troisième train épicycloïdal 45. Le troisième train épicycloïdal 45 comprend un arbre d'entrée 47 et un arbre de sortie 49 s'étendant selon l'axe central 19.

Le troisième train épicycloïdal 45 comprend un troisième bâti 51, un troisième satellite 53, un troisième porte-satellite 55 et une troisième couronne 57 agencés de manière identique aux éléments correspondants du second train épicycloïdal 9. L'arbre de sortie 17 du second train épicycloïdal 9 est accouplé à l'arbre d'entrée 47 du troisième train épicycloïdal 45. L'arbre de sortie 49 du troisième train épicycloïdal 45 est couplé à l'organe d'enroulement et de déroulement de toiles, écrans, stores ou volets roulants, tel qu'un tube ou un tambour d'enroulement.

Ainsi que représenté, le deuxième train épicycloïdal 9 et le troisième train épicycloïdal 45 sont des trains de type I, mettant en oeuvre des satellites 37, 53 à simple denture. Toutefois, il est tout à fait possible de les construire suivant un schéma de type II ou plus, avec des satellites 25 étagés, comme représentés schématiquement pour le premier train épicycloïdal 5 aux figures 1 et 2.

Les différentes couronnes peuvent être des éléments séparés ou communs à au moins deux trains épicycloïdaux 5, 9, 45.

Ci-dessus, nous avons décrit les éléments différenciant les premier et deuxième modes de réalisation. Nous allons maintenant détailler les éléments constituant le premier train épicycloïdal 5.

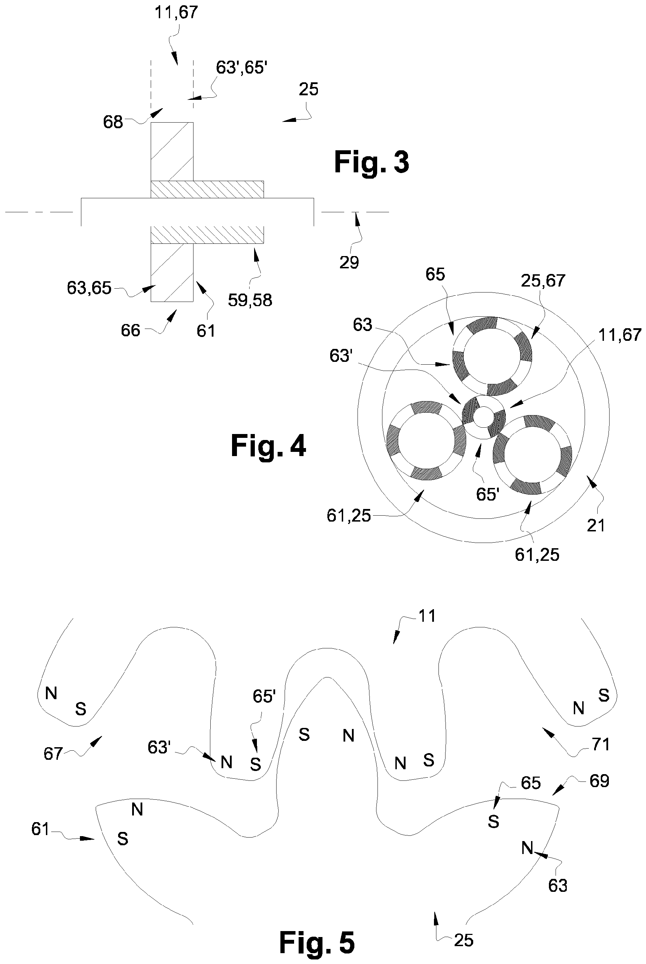

Comme illustré à la figure 3, le premier satellite 25 comprend sur une première circonférence 58 une portion d'entrainement mécanique 59 agencée pour coopérer par engrènement à une partie d'entrainement mécanique complémentaire disposée sur une circonférence intérieure 60 de la première couronne 27 représentée figure 1 et 2.

Le premier train épicycloïdal 5 est identique selon les premier et second mode de réalisation représentés sur les figures 1 et 2 mais présente plusieurs agencements possibles comme décrit ci-dessous.

Selon un premier agencement, illustré à la figure 4, le premier satellite 25 comprend une portion d'entrainement magnétique 61 pourvue d'une pluralité de pôles magnétiques 63, 65, la portion d'entrainement magnétique 61 étant distante axialement et radialement de la portion d'entrainement mécanique 59. Les pôles magnétiques positifs 63 et négatifs 65 sont disposés de manière alternée sur une seconde circonférence 66 du premier satellite 25.

L'arbre d'entrée 11 comprend une partie magnétique complémentaire 67 agencée pour coopérer avec la portion d'entrainement magnétique 61 par un effet d'interaction magnétique. Ainsi, la partie magnétique complémentaire 67 est également pourvue d'une pluralité de pôles magnétiques 63', 65'. Les pôles magnétiques positifs 63' et négatifs 65' sont disposés de manière alternée sur une circonférence extérieure 68 de l'arbre d'entrée 11.

Selon ce premier agencement, la portion d'entraînement magnétique est lisse, c'est-à-dire qu'elle ne présente pas de denture et coopère de manière exclusivement magnétique avec la partie magnétique complémentaire, dont la surface externe est lisse également.

Le nombre minimum de paires de pôles magnétiques 63', 65' disposés sur la circonférence extérieure 68 de l'arbre d'entrée 11 est de deux : deux pôles magnétiques positifs 63' et deux pôles magnétiques négatifs 65', soit deux paires de pôles magnétiques 63', 65'. Ceci est à comparer à un nombre minimum de 6 ou 7 dents classiquement dans les applications d'entrainement d'écrans de protection solaire. Le gain en termes de rapport de réduction peut donc être important, par exemple multiplié par deux, voire multiplié par trois au minimum par rapport à un engrènement mécanique à dentures classiques. Le nombre de paires de pôles sur la portion d'entraînement magnétique 61 peut alternativement être choisi égal à deux, trois ou quatre paires de pôles. On peut également par ailleurs réduire le diamètre de l'arbre d'entrée.

Selon ce premier agencement, le satellite 25 étagé comprend donc une portion à entrainement purement magnétique 61 et une portion à entrainement purement mécanique 59. La transmission du couple moteur est réalisée par répulsion magnétique sans contact entre la portion d'entrainement magnétique 61 et la partie d'entrainement magnétique complémentaire 67 et par engrènement mécanique entre la portion d'entraînement mécanique 59 et la couronne 27.

Selon un deuxième agencement, représenté à la figure 5, la portion d'entrainement magnétique 61 comprend également une denture 69 agencée pour coopérer avec une denture complémentaire 71 de l'arbre d'entrée 11 et chaque dent de la denture 69 et de la denture complémentaire 71 comprend un pôle magnétique positif 63, 63' symbolisé par la lettre N et un pôle magnétique négatif 65, 65' symbolisé par la lettre S.

Chaque pôle magnétique positif 63, 63' est disposé d'un premier côté de chaque dent et chaque pôle magnétique négatif 65, 65' est disposé d'un second côté de chaque dent.

Les pôles magnétiques 63, 65 de la portion d'entrainement magnétique 61 sont disposés par rapport aux pôles magnétiques 63', 65' de la partie magnétique complémentaire 67 pour interagir par répulsion magnétique.

Selon ce deuxième agencement, le satellite 25 étagé comprend une portion à entrainement mécanique et magnétique 61 et une portion à entrainement purement mécanique 59.

Selon un troisième agencement, le satellite 25 étagé comprend une portion à entrainement purement magnétique 61 et une portion à entrainement mécanique et magnétique 59, avec des dentures magnétisées comme expliqué relativement au second agencement.

Selon un quatrième agencement, le satellite 25 étagé comprend deux portions à entrainement mécanique et magnétique 59, 61 avec des dentures magnétisées.

Il est possible également de prévoir que la portion d'entrainement magnétique 61 est disposée sur la première circonférence 58 du premier satellite 25 en liaison avec la couronne 27. La partie magnétique complémentaire 67 est alors disposée sur la circonférence intérieure 60 de la première couronne 27. La portion d'entrainement mécanique 59 (ou mécanique et magnétique) est alors disposée sur la seconde circonférence 66 du premier satellite 5 coopérant avec la partie d'entrainement mécanique complémentaire disposée sur la circonférence extérieure 68 de l'arbre d'entrée 11. Ceci implique toutefois que la première couronne 27 en lien avec le bâti soit également pourvue d'un grand nombre de pôles magnétiques, ce qui renchérit le coût des pièces.

Nous avons décrit ci-dessus, selon deux modes de réalisation le réducteur épicycloïdal 4 et l'actionneur 1 et différents agencements du premier train épicycloïdal 5. Ci-après est présenté le fonctionnement du réducteur épicycloïdal 4 et de l'actionneur 1, notamment en lien avec un frein 7 mécanique de type frein à came ou frein à ressort.

Le moteur 3 transmet une puissance de rotation sur l'arbre d'entrée 11 du premier train épicycloïdal 5. La coopération de l'arbre d'entrée 5 avec le premier satellite 25 engendre la rotation du premier satellite 25 autour de l'axe central 19 et la rotation du premier porte-satellite 31 solidaire de l'arbre de sortie 13 du premier train épicycloïdal 5. La rotation de l'arbre de sortie 13 s'oppose au fonctionnement du frein 7, qui se desserre, permettant ainsi l'entraînement par couplage entre l'arbre de sortie 13 du premier train épicycloïdal 5 avec l'arbre d'entrée 15 du deuxième train épicycloïdal 9.

La puissance est ensuite transférée à l'arbre de sortie 17 du deuxième train épicycloïdal 9 ou à l'arbre de sortie 49 du troisième train épicycloïdal 45 selon le premier ou deuxième mode de réalisation. De cette façon, l'actionneur 1 entraîne en rotation un tube ou tambour d'enroulement et agit sur le déploiement ou repli d'un écran souple ou à lames.

La vitesse de rotation du moteur 3 est rapide et le couple est faible sur le premier arbre 11. Le premier train épicycloïdal 5, puis le deuxième train épicycloïdal 9 sont agencés pour réduire la vitesse de rotation et augmenter le couple au niveau de l'arbre de sortie 15 du deuxième train épicycloïdal 9, afin d'atteindre une vitesse de déplacement de l'écran qui soit acceptable.

Selon les premier et troisième agencements, les premiers satellites 25 comprennent une portion d'entraînement purement magnétique 61. Celle-ci, ainsi que la partie d'entrainement magnétique complémentaire 67 doivent être dimensionnées de manière à permettre une transmission d'au moins le couple nominal permettant de déplacer l'écran en toute position. Dans le cas contraire, l'entraînement peut glisser et ne plus remplir son rôle. Toutefois, un glissement maîtrisé peut être tout à fait avantageux, avec un frein mécanique, de type frein à came ou frein à ressort. Dans des cas où le moteur produit un surcouple, notamment parce que l'écran est bloqué par un obstacle, l'entraînement magnétique agit comme un débrayage, par glissement, pour éviter de transmettre vers le réducteur et la charge ce couple largement supérieur au couple nominal. Du point de vue de la charge, ceci intervient de manière transparente. Du fait du débrayage, l'arbre de sortie 13 du premier train épicycloïdal 5 est ralenti, ce qui provoque de nouveau un serrage du frein 7. Le mouvement de l'écran est donc stoppé, et ceci sans contrainte inutile sur les différents composants du réducteur 4.

De plus, comme contrairement au nombre de dents d'un engrenage, le nombre de pôles magnétiques d'un arbre peut être réduit au minimum à deux, il est possible d'obtenir de forts rapports de réduction par étage. Cette disposition permet de réduire le nombre d'étages ou de trains épicycloïdaux du réducteur épicycloïdal d'un actionneur 1 tubulaire (par exemple de quatre à trois ou de trois à deux).

Ainsi pour un rapport de réduction comparable, un réducteur épicycloïdal 4 comprenant un premier satellite 25 pourvu d'une portion d'entrainement magnétique 61 nécessite un nombre de trains épicycloïdaux moindre par rapport à un même réducteur avec des portions d'entraînement uniquement mécaniques.

Par ailleurs, du fait de la suppression du contact entre les dents, on supprime des bruits et vibrations et la lubrification n'est pas nécessaire pour cet étage.

A l'inverse, les portions magnéto-mécaniques avec des dentures magnétisées, il est possible de transmettre des couples plus importants que pour un étage purement magnétique, avec une réduction de bruit et d'usure par rapport à un engrènement purement mécanique.

Le choix de l'agencement peut être fait en fonction des applications de l'actionneur tubulaire, par exemple en fonction du type d'élément mobile à entraîner, de la taille et du poids de l'élément mobile.

Selon les deuxième et quatrième agencements, la transmission du couple moteur entre la portion d'entrainement magnétique 61 et la partie d'entrainement magnétique complémentaire 67 est réalisée par répulsion magnétique sans contact entre la denture 69 et la denture complémentaire 71, si dans un premier régime de fonctionnement, le moteur fournit un couple inférieur ou proche du couple nominal pour lequel la portion d'entrainement magnétique 61 et la partie d'entrainement magnétique complémentaire 67 ont été dimensionnées.

La transmission du couple moteur entre la portion d'entrainement magnétique 61 et la partie d'entrainement magnétique complémentaire 67 est réalisée par répulsion magnétique sans contact entre la denture 69 et la denture complémentaire 71.

Si au contraire, dans un deuxième régime de fonctionnement, le moteur 3 fournit un couple moteur supérieur au couple moteur nominal, la transmission du couple moteur entre la portion d'entrainement magnétique 61 et la partie d'entrainement magnétique complémentaire 67 est alors réalisée par un engrènement mécanique s'ajoutant à l'interaction magnétique, entre la denture 69 et la denture complémentaire 71.

En effet au-delà du couple nominal, la répulsion des pôles magnétiques 63, 65 n'est plus suffisante pour assurer seule la transmission du couple moteur : l'entrainement est magnéto-mécanique.

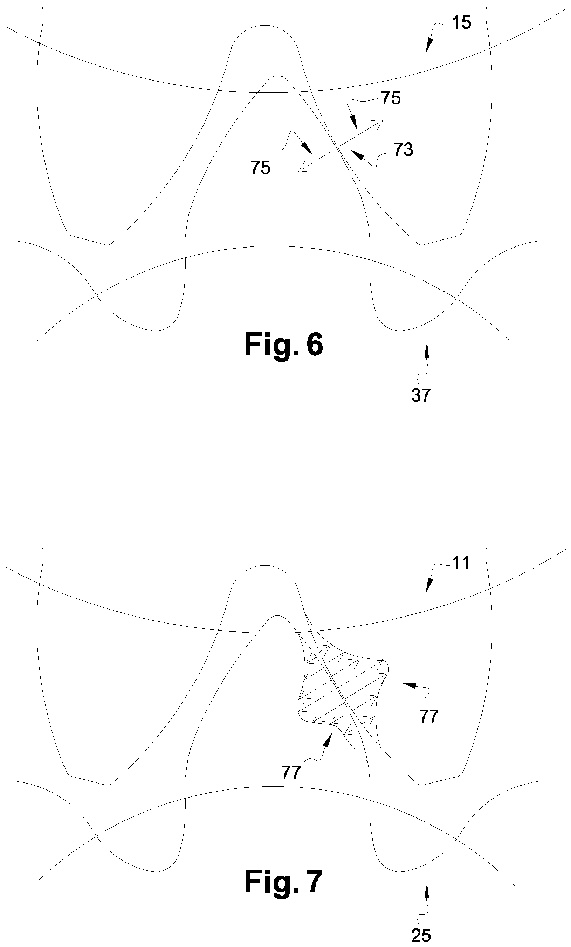

Les figures 6 et 7 illustrent les différences entre un entrainement purement mécanique et un entrainement magnéto-mécanique.

Comme illustré à la figure 6, l'arbre d'entrée 15 du second train épicycloïdal 9 engrène le second satellite 37. Le contact 73 entre la denture de l'arbre d'entrée 15 et la denture du second satellite 37 engendre une contrainte locale symbolisée par deux flèches 75 : il s'agit d'une transmission purement mécanique.

Comme illustré à la figure 7, l'arbre d'entrée 11 du premier train épicycloïdal 5 engrène le premier satellite 25. La combinaison d'un contact et de forces de répulsion magnétique engendre une répartition de la contrainte sur une zone représentée par deux ensembles de flèches 77 : il s'agit d'une transmission magnéto-mécanique.

La transmission magnéto-mécanique engendre une usure moindre des dentures qu'une transmission purement mécanique. Ainsi, il est possible que la denture 69 de la portion d'entrainement mécanique 61 et la denture complémentaire 71 de la partie d'entrainement magnétique complémentaire 67 comprennent un revêtement plastique chargé en fibre de verre.

Comme il va de soi, l'invention ne se limite pas aux seules modes de réalisation de ce réducteur épicycloïdal, décrits ci-dessus à titre d'exemple, elle en embrasse au contraire toutes les variantes de réalisation.

Ainsi il est envisageable de réaliser une portion d'entrainement magnétique 61 comprenant une pluralité de pôles magnétiques 63, 65 décalés dans le sens de l'axe central 19. La partie magnétique complémentaire 67 comprend alors une pluralité de pôles magnétiques complémentaires 63', 65' décalés selon l'axe central 19 et en regard des pôles magnétiques 63, 65 de la portion d'entrainement magnétique 61.

## Revendications

1. Actionneur (1) sensiblement longitudinal pour l'enroulement et le déroulement de toiles, écrans, stores ou volets roulants comprenant un réducteur épicycloïdal (4) comprenant au moins deux trains épicycloïdaux (5, 9), chaque train épicycloïdal (5, 9) comprenant un arbre d'entrée (11, 15), un arbre de sortie (13, 17),
- l'arbre de sortie (13) du premier train épicycloïdal (5) étant accouplé à l'arbre d'entrée (15) du second train épicycloïdal (9),
- le premier train épicycloïdal (5) comprenant un premier satellite (25) agencé pour transmettre un couple moteur entre l'arbre d'entrée (11) et l'arbre de sortie (13) du premier train épicycloïdal (5),
- le second train épicycloïdal (9) comprenant un second satellite (37) agencé pour réaliser un entraînement mécanique entre l'arbre d'entrée (15) et l'arbre de sortie (17) du second train épicycloïdal (9),
l'actionneur comprenant un moteur tubulaire (3) agencé pour transmettre un couple moteur à l'arbre d'entrée (11) du premier train épicycloïdal (5),
**caractérisé en ce que** - le premier satellite (25) comprend:
- une portion d'entraînement magnétique (61) agencée pour coopérer avec une partie magnétique complémentaire (67) du premier train épicycloïdal (5) par un effet d'interaction magnétique entre au moins un pôle magnétique (63, 65) de la portion d'entraînement magnétique (61) et au moins un pôle magnétique (63', 65') de la portion d'entraînement magnétique complémentaire (67), la portion d'entraînement magnétique (61) étant lisse et purement magnétique, et
- une portion d'entraînement mécanique (59) agencée pour coopérer mécaniquement avec une partie d'entraînement mécanique complémentaire du premier train épicycloïdal (5),
- la portion d'entraînement magnétique (61) et la portion d'entraînement mécanique (59) sont solidaires en rotation autour d'un axe de révolution (29) du premier satellite (25), et
- le réducteur épicycloïdal (4) comprend, en outre, un frein (7) intercalé entre l'arbre de sortie (13) du premier train épicycloïdal (5) et l'arbre d'entrée (15) du second train épicycloïdal (9), le frein (7) étant de type frein à ressort ou frein à came.

2. Actionneur (1) sensiblement longitudinal pour l'enroulement et le déroulement de toiles, écrans, stores ou volets roulants comprenant un réducteur épicycloïdal (4) comprenant au moins deux trains épicycloïdaux (5, 9), chaque train épicycloïdal (5, 9) comprenant un arbre d'entrée (11, 15), un arbre de sortie (13, 17),
- l'arbre de sortie (13) du premier train épicycloïdal (5) étant accouplé à l'arbre d'entrée (15) du second train épicycloïdal (9),
- le premier train épicycloïdal (5) comprenant un premier satellite (25) agencé pour transmettre un couple moteur entre l'arbre d'entrée (11) et l'arbre de sortie (13) du premier train épicycloïdal (5),
- le second train épicycloïdal (9) comprenant un second satellite (37) agencé pour réaliser un entraînement mécanique entre l'arbre d'entrée (15) et l'arbre de sortie (17) du second train épicycloïdal (9),
l'actionneur comprenant un moteur tubulaire (3) agencé pour transmettre un couple moteur à l'arbre d'entrée (11) du premier train épicycloïdal (5),
**caractérisé en ce que** - le premier satellite (25) comprend:
- une portion d'entraînement magnétique (61) agencée pour coopérer avec une partie magnétique complémentaire (67) du premier train épicycloïdal (5) par un effet d'interaction magnétique entre au moins un pôle magnétique (63, 65) de la portion d'entraînement magnétique (61) et au moins un pôle magnétique (63', 65') de la portion d'entraînement magnétique complémentaire (67), la portion d'entraînement magnétique (61) étant, en outre, pourvue d'une denture (69) agencée pour engrener une denture complémentaire (71) disposée sur la partie magnétique complémentaire (67), et
- une portion d'entraînement mécanique (59) agencée pour coopérer mécaniquement avec une partie d'entraînement mécanique complémentaire du premier train épicycloïdal (5),
- la portion d'entraînement magnétique (61) et la portion d'entraînement mécanique (59) sont solidaires en rotation autour d'un axe de révolution (29) du premier satellite (25), et
- le réducteur épicycloïdal (4) comprend en outre, un frein (7) intercalé entre l'arbre de sortie (13) du premier train épicycloïdal (5) et l'arbre d'entrée (15) du second train épicycloïdal (9), le frein (7) étant de type frein à ressort ou frein à came

3. Actionneur (1) selon la revendication 1 ou selon la revendication 2, dans lequel la partie magnétique complémentaire (67) comprend un nombre de paires de pôles magnétiques (63', 65') inférieur ou égal à deux, ou strictement inférieur à trois.

4. Actionneur (1) selon l'une des revendications précédentes, dans lequel la portion d'entraînement mécanique (59) et la portion d'entraînement magnétique (61) sont décalées axialement selon l'axe de révolution (29) du premier satellite (25).

5. Actionneur (1) selon l'une des revendications précédentes, dans lequel la portion d'entraînement mécanique (59) et la portion d'entraînement magnétique (61) sont décalées entre elles radialement par rapport à l'axe de révolution (29) du premier satellite (25).

6. Actionneur (1) selon l'une des revendications précédentes, dans lequel la portion d'entraînement mécanique (59) et la portion d'entraînement magnétique (61) sont circulaires et présentent des diamètres extérieurs différents.

7. Actionneur (1) selon l'une des revendications précédentes, dans lequel l'arbre de sortie (13) et le premier satellite (25) présentent une liaison pivot présentant un axe coïncidant avec l'axe de révolution (29) du premier satellite (25), en particulier l'arbre de sortie (13) étant solidaire d'un porte-satellite (31) du premier satellite (25).

8. Actionneur (1) selon la revendication 2, dans lequel chaque dent de la portion d'entrainement magnétique (61) comprend deux pôles magnétiques (63, 65) de polarité inverse, chaque pôle magnétique positif (63) étant disposé d'un premier côté de chaque dent et chaque pôle magnétique négatif (65) étant disposé d'un second côté de chaque dent.

9. Actionneur (1) selon l'une des revendications 2 ou 8, dans lequel la portion d'entrainement magnétique (61) et la partie magnétique complémentaire (67) sont agencées pour transmettre un couple moteur par l'interaction magnétique des pôles magnétiques (63, 65) avec les pôles magnétiques (63', 65') correspondants selon un premier régime de fonctionnement, ou par une interaction magnétique et un engrènement simultané de la denture (69) avec la denture complémentaire (71) selon un deuxième régime de fonctionnement.

10. Actionneur (1) selon l'une des revendications précédentes, dans lequel la partie magnétique complémentaire (67) est rapportée sur l'arbre d'entrée (11) du premier train épicycloïdal (5).

11. Actionneur (1) selon l'une des revendications 1 à 9, dans lequel la partie magnétique complémentaire (67) est disposée sur un bâti (21) du premier train épicycloïdal (5).

12. Actionneur (1) selon la revendication 11, dans lequel la partie magnétique complémentaire (67) est un engrenage planétaire intérieur du bâti (21) du premier train épicycloïdal (5).

13. Actionneur (1) selon l'une des revendications 1 à 12 comprenant en outre un organe d'enroulement et de déroulement desdites toiles, écrans, stores ou volets roulants agencé pour procéder à l'enroulement ou au déroulement par un entrainement mécanique de l'arbre de sortie (17) du second train épicycloïdal (9).

## Patentansprüche

1. Im Wesentlichen längsgerichteter Aktuator (1), zum Aufrollen und Abrollen von Sonnentüchern, Leinwänden, Markisen oder Rolljalousien, ein Planetengetriebe (4) umfassend, das mindestens zwei Planetenradsätze (5, 9) umfasst, wobei jeder Planetenradsatz (5, 9) eine Eingangswelle (11, 15) und eine Ausgangswelle (13, 17) umfasst,
- wobei die Ausgangswelle (13) des ersten Planetenradsatzes (5) mit der Eingangswelle (15) des zweiten Planetenradsatzes (9) gekuppelt ist,
- wobei der erste Planetenradsatz (5) einen ersten Satelliten (25) umfasst, der eingerichtet ist, um ein Motordrehmoment zwischen der Eingangswelle (11) und der Ausgangswelle (13) des ersten Planetenradsatzes (5) zu übertragen,
- wobei der zweite Planetenradsatz (9) einen zweiten Satelliten (37) umfasst, der eingerichtet ist, um einen mechanischen Antrieb zwischen der Eingangswelle (15) und der Ausgangswelle (17) des zweiten Planetenradsatzes (9) zu verwirklichen,
wobei der Aktuator einen Rohrmotor (3) umfasst, der eingerichtet ist, um ein Motordrehmoment auf die Eingangswelle (11) des ersten Planetenradsatzes (5) zu übertragen,
**dadurch gekennzeichnet, dass**
- der erste Satellit (25) umfasst:
- einen Abschnitt des magnetischen Antriebs (61), der eingerichtet ist, um mit einem komplementären magnetischen Teil (67) des ersten Planetenradsatzes (5) durch einen magnetischen Wechselwirkungseffekt zwischen mindestens einem Magnetpol (63, 65) des Abschnitts des magnetischen Antriebs (61) und mindestens einem Magnetpol (63', 65') des komplementären Abschnitts des magnetischen Antriebs (67) zusammenzuarbeiten, wobei der Abschnitt des magnetischen Antriebs (61) glatt ist und rein magnetisch, und
- einen Abschnitt des mechanischen Antriebs (59), der eingerichtet ist, um mechanisch mit einem komplementären Teil des mechanischen Antriebs des ersten Planetenradsatzes (5) zusammenzuarbeiten,
- wobei der Abschnitt des magnetischen Antriebs (61) und der Abschnitt des mechanischen Antriebs (59) drehfest um eine Rotationsachse (29) des ersten Satelliten (25) verbunden sind,
- wobei das Planetengetriebe (4) ferner eine Bremse (7) umfasst, die zwischen der Ausgangswelle (13) des ersten Planetenradsatzes (5) und der Eingangswelle (15) des zweiten Planetenradsatzes (9) eingeschoben ist, wobei die Bremse (7) vom Typ Federbremse oder Nockenbremse ist.

2. Im Wesentlichen längsgerichteter Aktuator (1), zum Aufrollen und Abrollen von Sonnentüchern, Leinwänden, Markisen oder Rolljalousien, ein Planetengetriebe (4) umfassend, das mindestens zwei Planetenradsätze (5, 9) umfasst, wobei jeder Planetenradsatz (5, 9) eine Eingangswelle (11, 15), eine Ausgangswelle (13, 17) umfasst,
- wobei die Ausgangswelle (13) des ersten Planetenradsatzes (5) mit der Eingangswelle (15) des zweiten Planetenradsatzes (9) gekuppelt ist,
- wobei der erste Planetenradsatz (5) einen ersten Satelliten (25) umfasst, der eingerichtet ist, um ein Motordrehmoment zwischen der Eingangswelle (11) und der Ausgangswelle (13) des ersten Planetenradsatzes (5) zu übertragen,
- wobei der zweite Planetenradsatz (9) einen zweiten Satelliten (37) umfasst, der eingerichtet ist, um einen mechanischen Antrieb zwischen der Eingangswelle (15) und der Ausgangswelle (17) des zweiten Planetenradsatzes (9) zu verwirklichen,
wobei der Aktuator, einen Rohrmotor (3) umfasst, der eingerichtet ist, um ein Motordrehmoment auf die Eingangswelle (11) des ersten Planetenradsatzes (5) zu übertragen,
**dadurch gekennzeichnet, dass**
- der erste Satellit (25) umfasst:
- einen Abschnitt des magnetischen Antriebs (61), der eingerichtet ist, um mit einem komplementären magnetischen Teil (67) des ersten Planetenradsatzes (5) durch einen magnetischen Wechselwirkungseffekt zwischen mindestens einem Magnetpol (63, 65) des Abschnitts des magnetischen Antriebs (61) und mindestens einem Magnetpol (63', 65') des komplementären Abschnitts des magnetischen Antriebs (67) zusammenzuarbeiten, wobei der Abschnitt des magnetischen Antriebs (61) ferner mit einer Verzahnung (69) versehen ist, die eingerichtet ist, um in eine komplementäre Verzahnung (71) einzugreifen, die auf dem komplementären magnetischen Teil (67) angeordnet ist, und
- einen Abschnitt des mechanischen Antriebs (59), der eingerichtet ist, um mechanisch mit einem komplementären Teil des mechanischen Antriebs des ersten Planetenradsatzes (5) zusammenzuarbeiten,
- wobei der Abschnitt des magnetischen Antriebs (61) und der Abschnitt des mechanischen Antriebs (59) drehfest um eine Rotationsachse (29) des ersten Satelliten (25) verbunden sind,
- wobei das Planetengetriebe (4) ferner eine Bremse (7) umfasst, die zwischen der Ausgangswelle (13) des ersten Planetenradsatzes (5) und der Eingangswelle (15) des zweiten Planetenradsatzes (9) eingeschoben ist, wobei die Bremse (7) vom Typ Federbremse oder Nockenbremse ist.

3. Aktuator (1) nach Anspruch 1 oder nach Anspruch 2, wobei der komplementäre magnetische Teil (67) eine Anzahl von Paaren von Magnetpolen (63', 65') kleiner oder gleich zwei oder strikt kleiner als drei umfasst.

4. Aktuator (1) nach einem der vorhergehenden Ansprüche, wobei der Abschnitt des mechanischen Antriebs (59) und der Abschnitt des magnetischen Antriebs (61) axial entlang der Rotationsachse (29) des ersten Satelliten (25) versetzt sind.

5. Aktuator (1) nach einem der vorhergehenden Ansprüche, wobei der Abschnitt des mechanischen Antriebs (59) und der Abschnitt des magnetischen Antriebs (61) radial zueinander bezüglich der Rotationsachse (29) des ersten Satelliten (25) versetzt sind.

6. Aktuator (1) nach einem der vorhergehenden Ansprüche, wobei der Abschnitt des mechanischen Antriebs (59) und der Abschnitt des magnetischen Antriebs (61) zirkular sind und unterschiedliche Außendurchmesser aufweisen.

7. Aktuator (1) nach einem der vorhergehenden Ansprüche, wobei die Ausgangswelle (13) und der erste Satellit (25) eine Drehverbindung aufweisen, die eine Achse aufweist, die mit der Rotationsachse (29) des ersten Satelliten (25) zusammenfällt, wobei insbesondere die Ausgangswelle (13) mit einem Satellitenträger (31) des ersten Satelliten (25) verbunden ist.

8. Aktuator (1) nach Anspruch 2, wobei jeder Zahn des Abschnitts des magnetischen Antriebs (61) zwei Magnetpole (63, 65) mit umgekehrter Polarität umfasst, wobei jeder positive Magnetpol (63) auf einer ersten Seite jedes Zahns angeordnet ist und jeder negative Magnetpol (65) auf einer zweiten Seite jedes Zahns angeordnet ist.

9. Aktuator (1) nach einem der Ansprüche 2 oder 8, wobei der Abschnitt des magnetischen Antriebs (61) und der komplementäre magnetische Teil (67) eingerichtet sind, um ein Motordrehmoment durch die magnetische Wechselwirkung der Magnetpole (63, 65) mit den entsprechenden Magnetpolen (63', 65') gemäß einer ersten Betriebsart zu übertragen oder durch eine magnetische Wechselwirkung und gleichzeitiges Ineinandergreifen der Verzahnung (69) mit der komplementären Verzahnung (71) gemäß einer zweiten Betriebsart.

10. Aktuator (1) nach einem der vorhergehenden Ansprüche, wobei der komplementäre magnetische Teil (67) auf die Eingangswelle (11) des ersten Planetenradsatzes (5) aufgesteckt ist.

11. Aktuator (1) nach einem der Ansprüche 1 bis 9, wobei der komplementäre magnetische Teil (67) auf einem Gehäuse (21) des ersten Planetenradsatzes (5) angeordnet ist.

12. Aktuator (1) nach Anspruch 11, wobei der komplementäre magnetische Teil (67) ein inneres Umlaufrädergetriebe des Gehäuses (21) des ersten Planetenradsatzes (5) ist.

13. Aktuator (1) nach einem der Ansprüche 1 bis 12, ferner ein Aufrollund Abrollelement der Sonnentücher, Leinwände, Markisen oder Rolljalousien umfassend, das eingerichtet ist, um das Aufrollen oder das Abrollen durch einen mechanischen Antrieb der Ausgangswelle (17) des zweiten Planetenradsatzes (9) durchzuführen.

## Claims

1. A substantially longitudinal actuator (1) for winding and unwinding canvases, screens, blinds or roller shutters comprising an epicyclic reduction gear (4) comprising at least two epicyclic gear trains (5, 9), each epicyclic gear train (5, 9) comprising an input shaft (11, 15), an output shaft (13, 17),
- the output shaft (13) of the first epicyclic gear train (5) being coupled to the input shaft (15) of the second epicyclic gear train (9),
- the first epicyclic gear train (5) comprising a first planet gear (25) arranged to transmit a motor torque between the input shaft (11) and the output shaft (13) of the first epicyclic gear train (5),
- the second epicyclic gear train (9) comprising a second planet gear (37) arranged to perform a mechanical drive between the input shaft (15) and the output shaft (17) of the second epicyclic gear train (9),
the actuator comprising a tubular motor (3) arranged to transmit a motor torque to the input shaft (11) of the first epicyclic gear train (5),
**characterized in that** - the first planet gear (25) comprises:
- a magnetic drive portion (61) arranged to cooperate with a complementary magnetic part (67) of the first epicyclic gear train (5) by a magnetic interaction effect between at least one magnetic pole (63, 65) of the magnetic drive portion (61) and at least one magnetic pole (63', 65') of the complementary magnetic drive portion (67), the magnetic drive portion (61) being smooth and purely magnetic, and
- a mechanical drive portion (59) arranged to mechanically cooperate with a complementary mechanical drive part of the first epicyclic gear train (5),
- the magnetic drive portion (61) and the mechanical drive portion (59) are rotatably secured about an axis of revolution (29) of the first planet gear (25),
- the epicyclic reduction gear (4) further comprises a brake (7) interposed between the output shaft (13) of the first epicyclic gear train (5) and the input shaft (15) of the second epicyclic gear train (9), the brake (7) being of the spring brake or cam brake type.

2. A substantially longitudinal actuator (1) for winding and unwinding canvases, screens, blinds or roller shutters comprising an epicyclic reduction gear (4) comprising at least two epicyclic gear trains (5, 9), each epicyclic gear train (5, 9) comprising an input shaft (11, 15), an output shaft (13, 17),
- the output shaft (13) of the first epicyclic gear train (5) being coupled to the input shaft (15) of the second epicyclic gear train (9),
- the first epicyclic gear train (5) comprising a first planet gear (25) arranged to transmit a motor torque between the input shaft (11) and the output shaft (13) of the first epicyclic gear train (5),
- the second epicyclic gear train (9) comprising a second planet gear (37) arranged to perform a mechanical drive between the input shaft (15) and the output shaft (17) of the second epicyclic gear train (9),
the actuator comprising a tubular motor (3) arranged to transmit a motor torque to the input shaft (11) of the first epicyclic gear train (5),
**characterized in that** - the first planet gear (25) comprises:
- a magnetic drive portion (61) arranged to cooperate with a complementary magnetic part (67) of the first epicyclic gear train (5) by a magnetic interaction effect between at least one magnetic pole (63, 65) of the magnetic drive portion (61) and at least one magnetic pole (63', 65') of the complementary magnetic drive portion (67), the magnetic drive portion (61) further being provided with a gear teeth (69) arranged to mesh with a complementary gear teeth (71) disposed on the complementary magnetic part (67), and
- a mechanical drive portion (59) arranged to mechanically cooperate with a complementary mechanical drive part of the first epicyclic gear train (5),
- the magnetic drive portion (61) and the mechanical drive portion (59) are rotatably secured about an axis of revolution (29) of the first planet gear (25),
- the epicyclic reduction gear (4) further comprises a brake (7) interposed between the output shaft (13) of the first epicyclic gear train (5) and the input shaft (15) of the second epicyclic gear train (9), the brake (7) being of the spring brake or cam brake type.

3. The actuator (1) according to claim 1 or claim 2, wherein the complementary magnetic part (67) comprises a number of magnetic pole (63', 65') pairs smaller than or equal to two, or strictly smaller than three.

4. The actuator (1) according to any of the preceding claims, wherein the mechanical drive portion (59) and the magnetic drive portion (61) are axially offset along the axis of revolution (29) of the first planet gear (25).

5. The actuator (1) according to any of the preceding claims, wherein the mechanical drive portion (59) and the magnetic drive portion (61) are offset from each other radially with respect to the axis of revolution (29) of the first planet gear (25).

6. The actuator (1) according to any of the preceding claims, wherein the mechanical drive portion (59) and the magnetic drive portion (61) are circular and have different external diameters.

7. The actuator (1) according to any of the preceding claims, wherein the output shaft (13) and the first planet gear (25) have a pivot connection having an axis coinciding with the axis of revolution (29) of the first planet gear (25), in particular the output shaft (13) being secured to a planet carrier (31) of the first planet gear (25).

8. The actuator (1) according to claim 2, wherein each tooth of the magnetic drive portion (61) comprises two magnetic poles (63, 65) of reverse polarity, each positive magnetic pole (63) being disposed on a first side of each tooth and each negative magnetic pole (65) being disposed on a second side of each tooth.

9. The actuator (1) according to any of claims 2 or 8, wherein the magnetic drive portion (61) and the complementary magnetic part (67) are arranged to transmit a motor torque by the magnetic interaction of the magnetic poles (63, 65) with the corresponding magnetic poles (63', 65') according to a first operating mode, or by a magnetic interaction and a simultaneous meshing of the gear teeth (69) with the complementary gear teeth (71) according to a second operating mode.

10. The actuator (1) according to any of the preceding claims, wherein the complementary magnetic part (67) is mounted on the input shaft (11) of the first epicyclic gear train (5).

11. The actuator (1) according to any of claims 1 to 9, wherein the complementary magnetic part (67) is disposed on a frame (21) of the first epicyclic gear train (5).

12. The actuator (1) according to claim 11, wherein the complementary magnetic part (67) is an internal planetary gear of the frame (21) of the first epicyclic gear train (5).

13. The actuator (1) according to any of claims 1 to 12 further comprising a member for winding and unwinding said canvases, screens, blinds or roller shutters arranged to carry out the winding or unwinding by a mechanical drive of the output shaft (17) of the second epicyclic gear train (9).
